# EUROPEAN PATENT APPLICATION

(11) **EP 1 092 963 A2**
(43) Date of publication of application: **18.04.2001**
(21) Application number: 00121654.8
(22) Date of filing: 04.10.2000
(51) Int. Cl.: G01F 23/292

(54) **Automatic device, fitted with perfected detector equipment, for checking filling level of open containers for sundry products, especially canned foods and the like**

(30) Priority: 07.10.1999 IT PC990020
(71) Applicant: Parmacontrols S.r.l., 43100 Parma (IT)
(72) Inventor: Chiesi, Emilio, 42028 Poviglio (RE) (IT)
(74) Representative: La Ciura, Salvatore

(57) **Abstract**

A device designed to check the filling level of open containers for canned foods and the like, equipped with a laser-beam detector unit (3) designed to detect the contour of the upper surface of a product introduced into a container (20), and means designed to calculate the quantity of product in the container on the basis of the contour detected, wherein forced ventilation means are provided, designed to keep the said transparent protective surface (7) constantly ventilated said means being fitted near the transparent protective surface (7) of the said laser, near the laser-beam emission and detection area. Said forced ventilation means comprise one or more cavities (11) near the said transparent surface (7), and wherein the device includes means designed to blow compressed air through the said cavities (11) and direct it along the said surface (7) in correspondence with the area through which the laser beam passes.

## Description

This invention relates to a device designed to check the filling level of containers for canned foods and the like, characterised by the presence of perfected equipment designed to detect the quantity of product in the open container, which device is designed in particular for use in combination with filling and/or dispensing machines preferably equipped with means which automatically reject containers with non-standard filling and feed them back to the upstream filling machine.

This device, which checks the level of the product in different containers, comprises detector means such as lasers that determine the quantity of food introduced into each container as it travels along a conveyor belt, which is fitted with a device that rejects non-standard and/or incorrectly filled containers and a logic circuit which feeds them back to the upstream filling machine.

Compared with known solutions, the device in question offers the advantage of including means which totally eliminate any condensate that could cloud the laser detectors, for example when operating under high temperature conditions and in the presence of steam, or merely fumes and dust, which mist, cloud or soil the surface of the detector systems, thus impairing their efficacy.

One of the techniques most often used to fill the various containers is to place the containers at a regular distance apart on a conveyor belt and convey them through a rotary or linear machine which automatically dispenses the food.

The quantity is then checked by specific instruments, which read the contour of the product surface in the open cans and calculate the quantity by means of specific algorithms.

So far, the possible alternatives for this type of inspection have consisted of gamma-ray or X-ray control systems, which have always been opposed by line operators because of the potential risk involved (as a result of which special permits are required for their use), and by companies because of the high cost of purchase and the necessary annual radiology check-ups.

A later solution was to use ultrasound sensors, which do not present the said risks but are far less precise, especially at high line speeds and under high temperature conditions or in the presence of steam.

The use of a laser sensor has only partly solved these problems; the problem encountered with this type of automatic apparatus is that the laser detector, in front of which a sheet of protective glass is fitted, may be disturbed by steam/fumes/dust from the product dispensed into the container after the cooking process or from a loose, cold product in the case of powders and granules.

However, the problem encountered with this type of automatic apparatus is that the laser detector, in front of which a sheet of protective glass is placed, may be disturbed by steam, fumes and dust from the product, which is generally introduced into the containers immediately after cooking or at any rate after one of more heating processes, or loose in the case of products in granular or powder form.

As a result, misting of the protective glass of the laser detectors caused by condensation of product vapours or the deposit of fumes and dust on the glass alters the precision of reading, so that the operatives are often forced to make manual corrections to the automatic control system or shut down the production cycle, sometimes quite often, to clean the glass.

The purpose of the present innovation is to eliminate these drawbacks by using very simple but highly effective systems which prevent the formation of condensate, dust and dirt on the transparent protective surfaces of the detector beams.

In accordance with the general purpose mentioned above, the use of the innovation in question eliminates the need for manual cleaning of steam mixed with dust and dirt which condenses on the detector means, with all the resulting practical advantages, including financial benefits due to the increased output of the machine.

The purposes and advantages set out above are achieved by the innovation in question, which is principally characterised by the fact that forced aeration means which keep the transparent protective surface constantly ventilated, thus preventing the formation of condensate and constantly ensuring correct operation of the detector means, are positioned in correspondence with the transparent protective parts of the laser detectors.

Further characteristics and details of the innovation in question will appear more clearly from the following description, given by way of example but not of limitation, by reference to the annexed drawings in which:
- figure 1 schematically represents a side view of the entire, detector device of a dispensing machine in accordance with the innovation

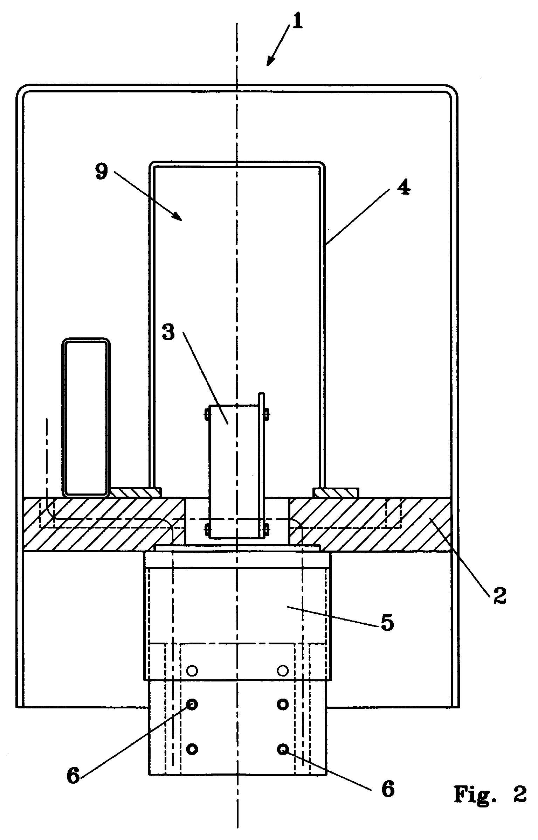

- figure 2 shows a schematic front view of the said machine

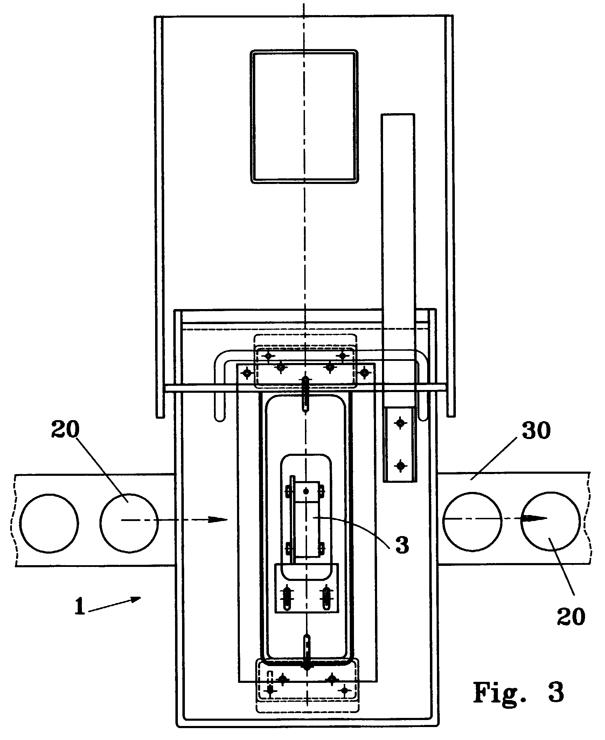

- figure 3 shows a schematic plan view of the said detector device

In the annexed figures, no. 1 indicates a detector device assembly fitted to a canned food product dispensing machine, which said device is situated downstream of a dispensing station installed along the route of the containers, which advance along a conveyor belt for automatic filling with food.

Detector device 1 comprises a support plate 2 on which is mounted laser detector 3, surrounded by a sealed casing 4.

A bracket 5, which acts as support for one or more photocells 6, is fixed to the bottom of plate 2. The said photocells are designed to detect when each container 20, transported by conveyor belt 30, passes under the reading area of the laser so that scanning can begin.

Laser detector 3, which faces downwards, reads the top contour of the product in each container through the container opening, and determines the quantity of product present in accordance with known algorithms and techniques. Laser 3 remains protected by a transparent surface, in particular a sheet of glass 7.

The special feature of the invention is that it uses forced ventilation means which, by creating air turbulence in front of the surface of protective sheet 7, keep it constantly clean, in particular by preventing the formation of condensate generated by the steam emitted by canned food.

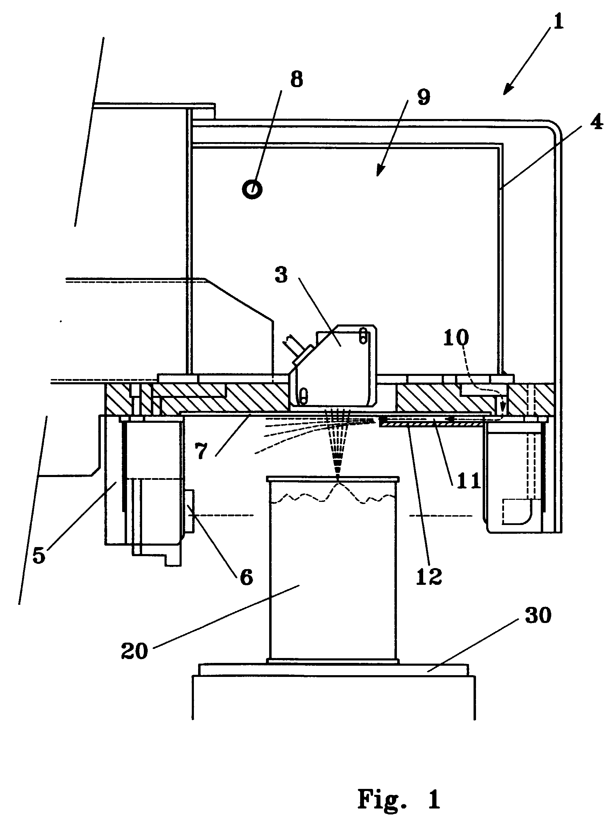

As shown in figure 1, the said forced ventilation means comprise a tube 8 for the inlet of compressed air from apparatus of known type not illustrated in the figure, which said air is conveyed through chamber 9 around the laser to cool it. From there, the air passes through grooves or channels 10 in plate 2 and exits through a cavity 11 between plate 2 and a pair of walls 12 at the sides of the hole designed for the passage of the laser beam, thus flowing along the glass, which remains perfectly clean and is guaranteed to remain in perfect operating condition throughout the stage of filling with the various products.

The quantity of product dispensed into each container can therefore be detected without error, even if the product emits cooking steam, as it is expelled and dispersed in the surrounding area.

An expert in the field could devise numerous modifications and variations to the system described and illustrated by way of example, all of which should be deemed to fall within the scope of the invention as defined in the following claims.

## Claims

1. A device designed to check the filling level of open containers for various products, especially canned foods and the like, equipped with perfected detector means of the type comprising a laser-beam detector unit (3) designed to detect the contour of the upper surface of a product introduced into a container (20), and means designed to calculate the quantity of product in the container on the basis of the contour detected, wherein forced ventilation means are provided, designed to keep the said transparent protective surface (7) constantly ventilated said means being fitted near the transparent protective surface (7) of the said laser (3), in correspondence with the laser-beam emission and detection area.

2. Device designed to check the filling level of open canned food containers as claimed in the preceding claim, wherein the said forced ventilation means comprise one or more cavities (10, 11) near the said transparent surface (7), and wherein the device includes means designed to blow compressed air through the said cavities (10, 11) and direct it along the said surface (7) in correspondence with the area through which the laser beam passes.

3. Device designed to check the filling level of open canned food containers as claimed in the preceding claim, wherein the said cavities (11) are connected to the chamber (9) in which the laser (3) is situated, and wherein the air conveyed through the said cavities (11) is the laser cooling air.

4. Device designed to check the filling level of open canned food containers as claimed in the preceding claim, wherein the said cavities (11) are bounded by a wall (12) fitted parallel to the glazed protective surface of the laser unit.

5. A food dispensing and can-filling apparatus, which comprises means for checking the container filling level as claimed in claim 1.

6. Food dispensing and can-filling apparatus as claimed in claim 5, including means designed to generate an air flow which flows along the transparent protective surface (7) in correspondence with the exit of the beam emitted by the laser detector (7) to keep it constantly clean, thus ensuring that it remains in perfect operating condition throughout the can-filling stages.
